# EUROPÄISCHE PATENTSCHRIFT

(11) **EP 3 827 184 B1**
(45) Veröffentlichungstag und Bekanntmachung des Hinweises auf die Patenterteilung: **25.01.2023**
(21) Anmeldenummer: 19742521.8
(22) Anmeldetag: 11.07.2019
(51) Int. Cl.: F16H 57/031

(54) **GETRIEBEMOTOR**
GEARED MOTOR
MOTO-RÉDUCTEUR

(30) Priorität: 24.07.2018 DE 102018005800
(43) Veröffentlichungstag der Anmeldung: 02.06.2021
(73) Patentinhaber: SEW-EURODRIVE GmbH & Co. KG, 76646 Bruchsal (DE)
(72) Erfinder: MORITZ, Thorsten, 76698 Ubstadt-Weiher (DE); WIECZOREK, Dorothee, 74015 Bretten (DE)
(86) Internationale Anmeldenummer: PCT/EP2019/025227
(87) Internationale Veröffentlichungsnummer: WO 2020/020486

(56) Entgegenhaltungen:
- EP-A1- 2 653 752
- DE-A1-102007 014 707
- DE-A1-102013 012 718

## Beschreibung

Die Erfindung betrifft einen Getriebemotor.

Es ist allgemein bekannt, dass beim Druckgussverfahren zur Herstellung metallischer Teile beim Entformen Schieber linear bewegt, also herausgezogen werden

Aus der DE 10 2007 014 707 A1 ist als nächstliegender Stand der Technik ein Getriebe bekannt.

Aus der EP 2 653 752 A1 ist eine Baureihe von Getriebegehäusen bekannt.

Aus der DE 10 2013 012 718 A1 ist ein Getriebe mit einem Gehäuseteil bekannt.

Der Erfindung liegt daher die Aufgabe zugrunde, einen Getriebemotor möglichst kompakt weiterzubilden.

Erfindungsgemäß wird die Aufgabe bei dem Getriebemotor nach den in Anspruch 1 angegebenen Merkmalen gelöst.

Wichtige Merkmale der Erfindung bei dem Getriebemotor sind, dass der Getriebemotor ein von einem Elektromotor antreibbares Getriebe, insbesondere Winkelgetriebe, aufweist,
wobei das Getriebe eine mittels Lagern im Gehäuseteil drehbar gelagerte erste Zwischenwelle aufweist und eine eintreibende Welle, insbesondere und eine abtreibende Welle,
das Gehäuseteil derart asymmetrisch ausgeführt ist, dass diejenige Ebene, deren Normalenrichtung parallel zur Drehachse der ersten Zwischenwelle ausgerichtet ist und welche die Drehachse der eintreibenden Welle enthält, keine Symmetrieebene in Bezug auf die gesamte äußere Oberfläche des Gehäuseteils ist und auch keine Symmetrieebene in Bezug auf die Gehäusewand des Gehäuseteils ist,
wobei die Ebene jedoch eine Symmetrieebene hinsichtlich der beiden Verbindungsflächen samt deren Bohrbilder ist,
insbesondere wobei die abtreibende Welle parallel zur ersten Zwischenwelle angeordnet ist.

Von Vorteil ist dabei, dass das Gehäuseteil eng um die Verzahnungsteile herum anordenbar ist und somit das Getriebe kompakt aufbaubar ist. Außerdem ist somit nur ein kleines Innenraumvolumen im Getriebe vorsehbar. Trotzdem ist abtriebsseitig an beiden Verbindungsflächen jeweils dieselbe Vorrichtung verbindbar. Denn hierzu sind die Bohrbilder der beiden Verbindungsflächen symmetrisch zueinander ausgeführt und somit die zu verbindende Vorrichtung an beiden Verbindungsflächen gleichartig verbindbar.

Die Verbindungsflächen sind parallel zueinander ausgerichtet und parallel zur Symmetrieebene.

Weitere Eigenschaften der mittels der beiden Verbindungsflächen erreichten mechanischen Schnittstellen sind ebenfalls gleichartig ausgeführt. Beispielsweise sind die beiden Verbindungsflächen mit zueinander ebenfalls symmetrisch ausgeführten Zentriermitteln, wie Zentrierbund oder Zentrierrand, ausgestattet. Die abtriebsseitige Zentrierung der anzutreibenden jeweiligen Vorrichtung ist also ebenfalls symmetrisch ausgeführt und/oder vorgesehen.

Bei einer vorteilhaften Ausgestaltung weist eine anzutreibende Last ein zu einem ersten Teil der Last drehbar gelagertes zweites Teil auf,
wobei das Gehäuseteil an einer ersten Außenseite ein erstes Bohrbild und ein erstes Zentriermittel, insbesondere Zentrierbund, Zentrierrand und/oder Zentriernut, aufweist,
wobei das Gehäuseteil an einer zweiten Außenseite ein zweites Bohrbild und ein zweites Zentriermittel, insbesondere Zentrierbund, Zentrierrand und/oder Zentriernut, aufweist,
insbesondere wobei die erste und zweite Außenseite bezogen auf die Drehachse der abtreibenden Welle axial voneinander beabstandet sind,
wobei das erste und zweite Bohrbild zueinander gleichartig, insbesondere identisch, sind und/oder wobei das erste und zweite Zentriermittel zueinander gleichartig, insbesondere identisch, ausgeführt sind,
insbesondere wobei die erste und zweite Außenseite mit dem ersten und zweiten Bohrbild bezogen auf die Symmetrieebene, insbesondere Ebene, symmetrisch sind,
wobei wahlweise
   - das zweite Teil mit dem ersten axialen Endbereich der Hohlwelle drehfest verbindbar ist und das erste Teil mit dem Gehäuseteil am ersten Bohrbild und ersten Zentriermittel verbindbar ist,
   - oder das zweite Teil mit dem zweiten axialen Endbereich der Hohlwelle drehfest verbindbar ist und das erste Teil mit dem Gehäuseteil am zweiten Bohrbild und zweiten Zentriermittel verbindbar ist.

Von Vorteil ist dabei, dass an beiden Seiten, also A-Seite und/oder B-Seite, mittels derselben mechanischen Schnittstelle eine gleichartige Last anschließbar ist, obwohl das Gehäuseteil asymmetrisch ausgeführt ist. Die Anschlussmaße, die Bohrlöcher des Bohrbildes für Verbindungsschrauben und die Zentriermittel sind an der abtriebsseitigen A-Seite und B-Seite gleichartig.

**Erfindungsgemäß** weist der Getriebemotor, welcher ein von einem Elektromotor des Getriebemotors antreibbares Getriebe, insbesondere Winkelgetriebe, aufweist,
- ein mittels Druckgussverfahrens, wobei oder nach welchem zum Entformen jeweilige Schieber in jeweiligen Ziehrichtungen bewegt, insbesondere herausgezogen, werden, hergestelltes Gehäuseteil und
- eine eintreibende Welle
auf,
wobei das Gehäuseteil einen in einer erste Ziehrichtung, insbesondere mit einem ersten Schieber, entformten Kanal aufweist, welcher durch die Wandung des Gehäuses durchgehend ausgeführt ist und in den Innenraumbereich des Getriebes mündet,
wobei die Ziehrichtung zur Drehachse der eintreibenden Welle einen nicht verschwindenden Winkel aufweist, insbesondere dessen Betrag zwischen 5° und 45°, insbesondere zwischen 5° und 20°, beträgt.

Von Vorteil ist dabei, dass das mit dem Ritzel der eintreibenden Welle im Eingriff stehende Tellerrad zumindest teilweise in den Kanal hineinragt, insbesondere mehr als die Hälfte des Tellerrads in den Kanal hineinragt. Auf diese Weise ist das Getriebe sehr kompakt ausführbar.

Bei einer vorteilhaften Ausgestaltung ist das Getriebe ein Winkelgetriebe,
wobei eine mit der eintreibenden Welle drehfest verbunden Verzahnung, insbesondere eines Ritzels, mit der Verzahnung eines Tellerrads im Eingriff ist, wobei das Tellerrad mit einer ersten Zwischenwelle des Getriebes drehfest verbunden ist,
wobei die senkrechte Projektion der Drehachse der ersten Zwischenwelle auf die Ziehrichtung, insbesondere auf eine die Ziehrichtung enthaltende Ebene, in demjenigen Bereich enthalten ist, welcher von der senkrechten Projektion des Kanals auf die Ziehrichtung, insbesondere auf die die Ziehrichtung enthaltende Ebene, überdeckt ist. Von Vorteil ist dabei, dass das Tellerrad zu mehr als der Hälfte in den Kanal hineinragt.

Bei einer vorteilhaften Ausgestaltung ist der lichte Durchmesser des Kanals größer ist als der größte Außendurchmesser des Tellerrads. Von Vorteil ist dabei, dass der Kanal breit genug für eine zumindest teilweise Aufnahme des Tellerrads ist.

Bei einer vorteilhaften Ausgestaltung weist das Gehäuseteil einen in einer zweiten Ziehrichtung, insbesondere mit einem zweiten Schieber, entformten Bereich auf, wobei die zweite Ziehrichtung zur Normalenrichtung der von der Drehachse der eintreibenden Welle und der Drehachse der ersten Zwischenwelle aufgespannten Ebene einen nicht verschwindenden Winkel aufweist, insbesondere dessen Betrag zwischen 5° und 45°, insbesondere zwischen 5° und 20°, beträgt. Von Vorteil ist dabei, dass der Getriebedeckel kürzer ausführbar ist, der Innenraumbereich des Getriebes kleiner auslegbar ist, so dass weniger Schmieröl im Getriebe notwendig ist, weil die Gehäusewandung des Gehäuseteils näher an den Verzahnungsteilen verläuft.

Bei einer vorteilhaften Ausgestaltung geht der Kanal durch einen Flanschbereich des Getriebes durch,
insbesondere wobei das Getriebe am Flanschbereich mit dem Elektromotor verbunden ist. Von Vorteil ist dabei, dass das Getriebe über den abtriebsseitigen Flanschbereich an einem nicht drehbar angeordneten Bereich der anzutreibenden Last befestigt wird und somit keine Fußflächen notwendig sind und/oder zu bearbeiten sind. Der Abtriebsseitig Flanschbereich fungiert somit auch als Drehmomentstütze.

Bei einer vorteilhaften Ausgestaltung ist das Gehäuseteil mit einem Getriebedeckel verbunden, wobei die Verbindungsfläche eben ausgeführt ist,
wobei der Getriebedeckel mittels Schrauben mit dem Gehäuseteil verbunden ist,
wobei die Verbindungsfläche parallel zur Drehachse der eintreibenden Welle und parallel zur Drehachse der Zwischenwelle ist,
wobei die Schrauben, insbesondere deren Schraubachsrichtung, parallel zur zweiten Ziehrichtung ausgerichtet sind,
insbesondere wobei eine Flachdichtung zwischen Gehäuseteil und Getriebedeckel angeordnet ist. Von Vorteil ist dabei, dass die Schrauben wenig Raumbereich in der Wandung des Gehäuseteils beanspruchen, also die Wandstärke im Bereich der für die Schrauben vorgesehenen Gewindebohrungen im Gehäuseteil möglichst klein ist. Denn die Ziehrichtung der Wandung des Gehäuseteils ist parallel zur Schraubachsrichtung der Schrauben. Nachteilig ist hierbei, dass die Schrauben nicht senkrecht durch die Verbindungsfläche geführt sind sondern die Gewindebohrung entsprechend schräg zur Verbindungsfläche ins Gehäuseteil einzubringen sind.

Bei einer vorteilhaften Ausgestaltung ist die jeweilige Schraube durch eine jeweilige Stufenbohrung des Getriebedeckels durchgeführt und in eine jeweilige Gewindebohrung mit ihrem Gewindebereich eingeschraubt,
wobei die Bohrung, insbesondere Stufenbohrung, und die Gewindebohrung jeweils parallel zur zweiten Ziehrichtung aufgerichtet ist,
insbesondere wobei der Schraubenkopf der jeweiligen Schraube an der Deckelfläche, insbesondere an der Stufe der jeweiligen Stufenbohrung, flächig aufliegt. Von Vorteil ist dabei, dass auch die Stufenbohrung parallel zur Ziehrichtung ausgerichtet ist. Der Schraubenkopf liegt auf der Deckelfläche des Getriebedeckels auf, wenn die Bohrung nicht als Stufenbohrung ausgeführt ist. Bei Ausführung der Bohrung als Stufenbohrung hingegen wird die Schraube mit abgesenktem Schraubenkopf ausgeführt.

Bei einer vorteilhaften Ausgestaltung ist die Bohrung, insbesondere Stufenbohrung, in einen ebenen Oberflächenbereich des Getriebedeckels eingebracht, wobei die Normalenrichtung des ebenen Oberflächenbereichs parallel zur zweiten Ziehrichtung ausgerichtet ist. Von Vorteil ist dabei, dass die als Stufenbohrung ausgeführte Bohrung senkrecht zum Oberflächenbereich eingebracht ist.

Bei einer vorteilhaften Ausgestaltung ist das Gehäuseteil derart asymmetrisch ausgeführt, dass diejenige Ebene, deren Normalenrichtung parallel zur Drehachse der ersten Zwischenwelle ausgerichtet ist und welche die Drehachse der eintreibenden Welle enthält, keine Symmetrieebene ist. Von Vorteil ist dabei, dass Material und Innenbereichsvolumen, also auch Ölvolumen, auf der vom Abtriebsrad abgewandten Seite der Ebene einsparbar ist.

Bei einer vorteilhaften Ausgestaltung ist das Gehäuseteil derart asymmetrisch ausgeführt, dass das mit der abtreibenden Welle des Getriebes drehfest verbundene Verzahnungsteil, insbesondere Zahnrad, von der Ebene beabstandet ist,
insbesondere wobei ein größerer Anteil des Volumens des Innenraumbereichs des Getriebes auf der dem Verzahnungsteil zugewandten Seite der Ebene als auf der vom Verzahnungsteil abgewandten Seite der Ebene angeordnet ist. Von Vorteil ist dabei, dass das Gehäuseteil derart ausführbar ist, dass der Innenraumbereich auf der vom Abtriebsrad abgewandten Seite ein kleineres Volumen aufweist als auf der dem Abtriebsrad zugewandten und/oder als auf der das Abtriebsrad umfassenden Seite der Ebene.

Bei einer vorteilhaften Ausgestaltung ist die abtreibende Welle axial beidseitig zugänglich angeordnet, insbesondere wobei die abtreibende Welle als Hohlwelle ausgeführt ist. Von Vorteil ist dabei, dass beidseitig eine anzutreibende Welle verbindbar, insbesondere einsteckbar ist. Die Abtriebswelle ist auch als Vollwelle ausführbar.

Bei einer vorteilhaften Ausgestaltung ist das Gehäuseteil als Aluminium-Druckgussteil gefertigt. Von Vorteil ist dabei, dass das Getriebe eine geringe Masse aufweist und somit vom Motor nur eine geringe Haltekraft aufgebracht werden muss.

Bei einer vorteilhaften Ausgestaltung weist das Gehäuseteil die selbe mechanische Schnittstelle für eine vom Getriebe, insbesondere von der abtreibenden Welle, anzutreibende Last axial beidseitig der abtreibenden Welle auf,
insbesondere also eine erste Schnittstelle am Gehäuseteil zur Verbindung mit einer vom vorderen axialen Endbereich der abtreibenden Welle anzutreibenden Last vorhanden ist und eine zweite Schnittstelle am Gehäuseteil zur Verbindung mit einer vom hinteren axialen Endbereich der abtreibenden Welle anzutreibenden Last vorhanden ist, wobei die erste Schnittstelle identisch ist zur zweiten Schnittstelle,

wobei die Schnittstelle jeweils ein am Gehäuseteil angeordnetes Bohrbild und ein am Gehäuseteil angeordnetes Zentriermittel aufweist. Von Vorteil ist dabei, dass die anzutreibende Last axial beidseitig in derselben Weise verbindbar ist. Wenn jedoch die Last näher am Abtriebsrad angeordnet ist, sind höhere Querkräfte und Biegemomente aufnehmbar als wenn die Last weiter entfernt vom Abtriebsrad angeordnet ist. Denn auf der dem Abtriebsrad zugewandten Seite der Ebene ist die Gehäusewand näher am Abtriebsrad als die axial gegenüberliegende Wand vom Abtriebsrad entfernt ist. Somit sind auch die in der jeweiligen Gehäusewand aufgenommenen Lager der abtreibenden Welle entsprechend weit entfernt.

Wir jedoch die Last auf der vom Abtriebsrad abgewandten Seite der Ebene mit dem Getriebe verbunden, bewirkt der größere Abstand zum Endrad wegen der größeren axialen Länge eine höhere Torsion und höhere Elastizität an der abtreibenden Welle und somit eine weniger steife Verbindung, was zu einem entsprechend anderen Schwungverhalten und zu einer anderen Schwingungsneigung führt.

Die Erfindung wird nun anhand von schematischen Abbildungen näher erläutert:
In der Figur 1 ist ein Gehäuseteil 1 eines erfindungsgemäßen Getriebes in Seitenansicht dargestellt, wobei eine Schnittlinie A - A gekennzeichnet ist.
In der Figur 2 ist ein Querschnitt entlang der Schnittlinien A-A gezeigt.
In der Figur 3 ist das mit Verzahnungsteilen befüllte Gehäuseteil gezeigt.
In der Figur 4 ist eine zugehörige Hinteransicht dargestellt.
In der Figur 5 ist eine Schnittlinie B-B gekennzeichnet.
In der Figur 6 ist ein Querschnitt entlang der Schnittlinien B-B gezeigt.
In der Figur 7 ist ein vergrößerter Ausschnitt aus dem Verbindungsbereich zwischen einem auf das Gehäuseteil 1 aufgesetzten Getriebedeckel 70 mit dem Gehäuseteil 1 dargestellt.
In der Figur 8 ist der Getriebedeckel 70 in Schrägansicht dargestellt.
In der Figur 9 ist eine Flachdichtung 90 in Schrägansicht dargestellt, welche zwischen Getriebedeckel 70 und Gehäuseteil 1 angeordnet ist.
In der Figur 10 ist eine zugehörige Draufsicht auf die Flachdichtung 90 dargestellt.
In der Figur 11 ist eine Schrägansicht des Getriebes dargestellt.
In der Figur 12 ist eine Schrägansicht aus einer anderen Blickrichtung dargestellt.
In der Figur 13 ist ein Querschnitt durch das erfindungsgemäß mit schräger Ziehrichtung hergestellte Gehäuseteil 1 dargestellt, wobei ein nicht erfindungsgemäß mit nicht schräger Ziehrichtung hergestelltes Gehäuseteil gestrichelt angedeutet ist.
In der Figur 14 ist zusätzlich zur Figur 13 die senkrechte Projektion D der Drehachse der ersten Zwischenwelle in eine Ebene E, welche die Ziehrichtung des Kanals 2 enthält, dargestellt und ebenso die senkrechte Projektion (K1 bis K2) des Kanals 2, wodurch erkennbar ist, dass D im von der Projektion des Kanal 2 umfasst ist.

Wie in den Figuren dargestellt, weist das insbesondere aus Aluminium mittels Druckguss hergestellte Gehäuseteil 1 einen Kanal 2 auf, welcher von der Umgebung in den Innenraumbereich des Getriebes mündet. Der Kanal 2 ist der Entformungsbereich eines ersten Schiebers bei der Druckgussherstellung des Gehäuseteils 1. Also ist der Kanal 2 Teilbereich desjenigen Raumbereichs, welcher vom ersten Schieber beim Herausziehen benötigt und/oder durchfahren wird.

Wichtig ist bei der Erfindung, dass die Ziehrichtung des ersten Schiebers, also die Kanalrichtung, einen nicht verschwindenden Winkel zur eintreibenden Welle des Getriebes aufweist. Somit ist also die Ziehrichtung nicht parallel zur eintreibenden Welle. Der Betrag dieses nicht verschwindenden Winkels weist einen Wert auf zwischen 5° und 45°, vorzugsweise zwischen 5° und 20°.

Bei der Druckgussherstellung wird ein zweiter Schieber in einer Ziehrichtung herausgezogen, welche einen nicht verschwindenden Winkel aufweist zu derjenigen Richtung, welche senkrecht zur Richtung der eintreibenden Welle, insbesondere zu deren Drehachse, und senkrecht zur Richtung der abtreibenden Welle, insbesondere zu deren Drehachse, ausgerichtet ist.

Da das Getriebe ein Winkelgetriebe ist, ist die eintreibende Welle 20, insbesondere deren Drehachse, senkrecht gerichtet zur abtreibenden Welle 5, insbesondere zu deren Drehachse.

Die Ziehrichtung des zweiten Schiebers weist also einen nicht verschwindenden Winkel auf zu derjenigen Richtung, welche senkrecht zur Drehachsrichtung der eintreibenden Welle und senkrecht zur Drehachsrichtung der abtreibenden Welle 5 ist. Der Betrag dieses nicht verschwindenden Winkels weist einen Wert auf zwischen 5° und 45°, vorzugsweise zwischen 5° und 20°.

Mit der eintreibenden Welle ist ein Verzahnungsteil, insbesondere Ritzel, drehfest verbunden oder alternativ ist eine Verzahnung an der eintreibenden Welle ausgeformt. Hiermit steht ein auf einer Zwischenwelle 20 des Getriebes drehfest mit der Zwischenwelle 20 angeordnetes Verzahnungsteil 21, insbesondere Tellerrad, im Eingriff. Diese Zwischenwelle 20 ist mittels Lagern drehbar gelagert, wobei die Lager im Gehäuseteil 1 aufgenommen sind. Die Lageraufnahmen der Lager sind jeweils mit einem Deckelteil 3, insbesondere Verschlusskappe, abgedeckte. Das Deckelteil 3 dichtet außerdem öldicht gegen die Umgebung ab.

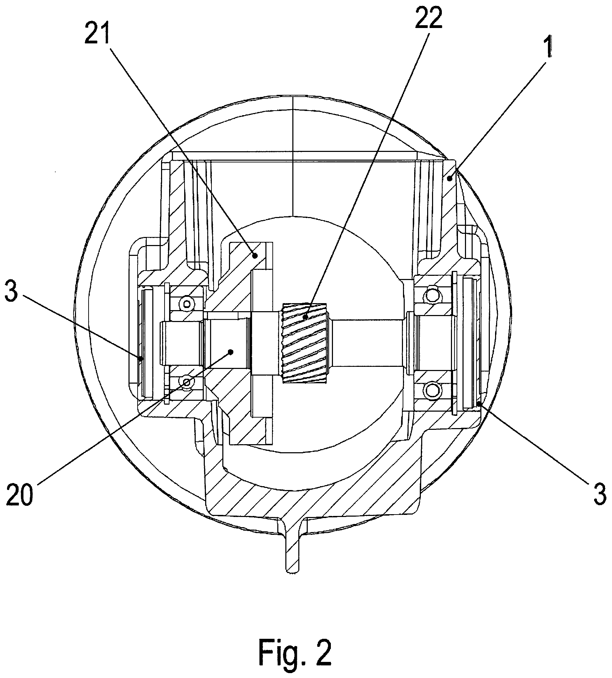

Wie in Figur 2 gezeigt, ist die Zwischenwelle 20 drehfest mit der Verzahnung 22 verbunden.

Die Zwischenwelle weist auch eine Verzahnung 22 auf, welche somit drehfest verbunden ist mit der Zwischenwelle 20 und im Eingriff steht mit einer Verzahnung oder mit einem Verzahnungsteil einer weiteren Welle des Getriebes.

Die eintreibende Welle ragt in den Kanal 2 hinein. Die eintreibende Welle ist drehfest mit der Rotorwelle des Elektromotors verbunden oder einstückig, also einteilig, mit der Rotorwelle des Elektromotors ausgeführt.

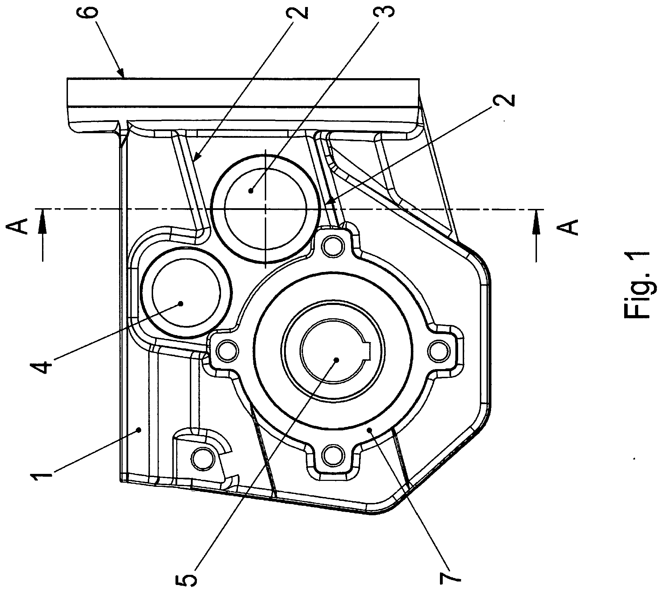

Wie in Figur 1 ersichtlich, enthält die senkrechte Projektion des Kanals in eine die Ziehrichtung des ersten Schiebers enthaltende Ebene die senkrechte Projektion der Drehachse des Verzahnungsteils 21, insbesondere Tellerrads. Insbesondere enthält sie mehr als die Hälfte der senkrechten Projektion des gesamten Verzahnungsteils 21.

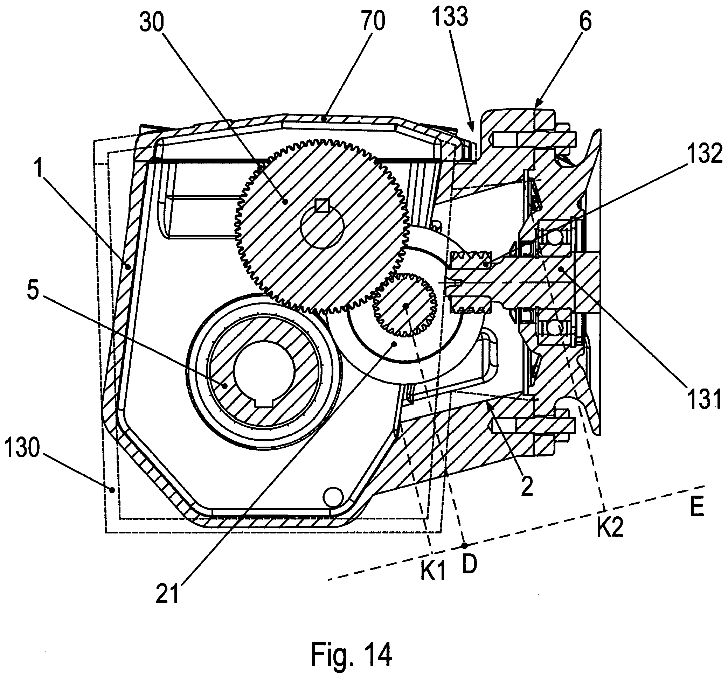

In Figur 1 ist dies daran erkennbar, dass der Mittelpunkt der Verschlusskappe 3 senkrecht projiziert auf den Rand des Kanals im Kanal 2 liegt und nicht außerhalb. Dies ist auch durch die senkrechte Projektion D in Figur 14 verdeutlicht, welche die Projektion des Mittelpunkts in eine zur Ziehrichtung parallele Ebene E darstellt. Diese senkrechte Projektion (K1 bis K2) ist in der senkrechten Projektion des Kanals 2 enthalten.

Somit ragt also das Verzahnungsteil 21 in den Kanal 2 hinein, insbesondere ragt mehr als die Hälfte des Verzahnungsteils 21 in den Kanal 2 hinein.

Mittels der ebenfalls schrägen Ziehrichtung des zweiten Schiebers ist ein verringertes Ölvolumen erreichbar, da die Wandung des Gehäuseteils 1 sich näher an die Verzahnungsteile anschmiegt als bei nicht schrägen, also jeweils zueinander senkrechten Ziehrichtungen der Schieber.

Der Kanal 2 durchdringt den Flanschbereich 6 und mündet in die Umgebung. Die so entstandene Öffnung ist bei Anbau des Elektromotors verschlossen, da das Gehäuse des Elektromotors mit dem Flanschbereich 6 des Gehäuseteils 1 verbunden wird, insbesondere mittels Schrauben.

Das Getriebe ist ohne Fußbereiche ausgeführt und der Elektromotor ist über die Verbindung zwischen Flanschbereich 6 und Gehäuse des Elektromotors gehalten. Vorteiligerweise fungiert somit diese Verbindung auch als Drehmomentstütze für den Motor. Über den abtriebsseitigen Flanschbereich 7, welcher mit einem nicht drehbar angeordneten Bereich der anzureibenden Last verbunden ist, ist der Getriebemotor, aufweisend Elektromotor und Getriebe, gehalten.

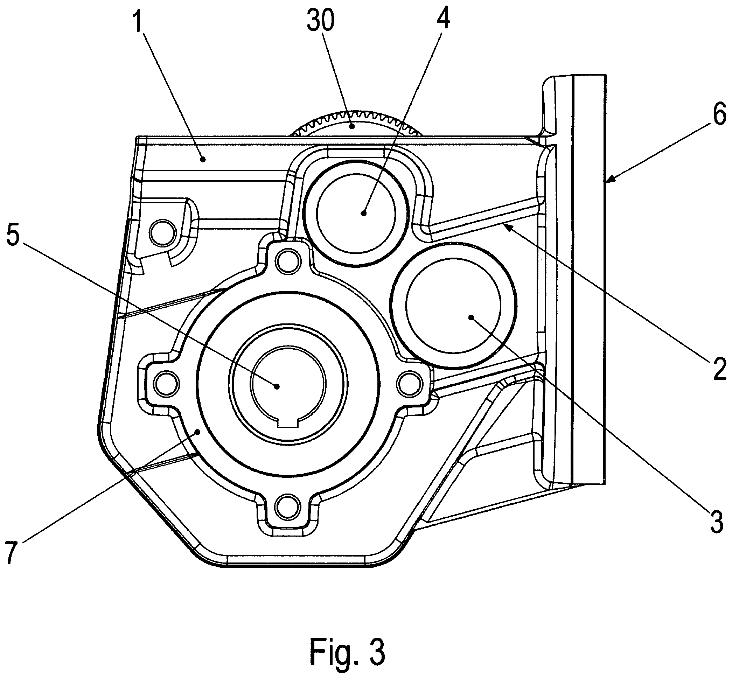

In Figur 3 ist das Getriebe in Seitenansicht dargestellt, wobei der Getriebedeckel 70 abgehoben ist. Somit ragt das drehfest mit einer weiteren Zwischenwelle verbundene Verzahnungsteil 30 aus dem Innenraumbereich des Getriebes teilweise heraus.

Wie in der Hinteransicht, also Draufsicht mit Blickrichtung entgegen der eintreibenden Welle, gezeigt, ist das Getriebe asymmetrisch ausgeführt. Denn diejenige Ebene 42, deren Normalenrichtung parallel zur Drehachse der abtreibenden Welle 5 ausgerichtet ist und welche die Drehachse der eintreibenden Welle enthält, ist keine Symmetrieebene.

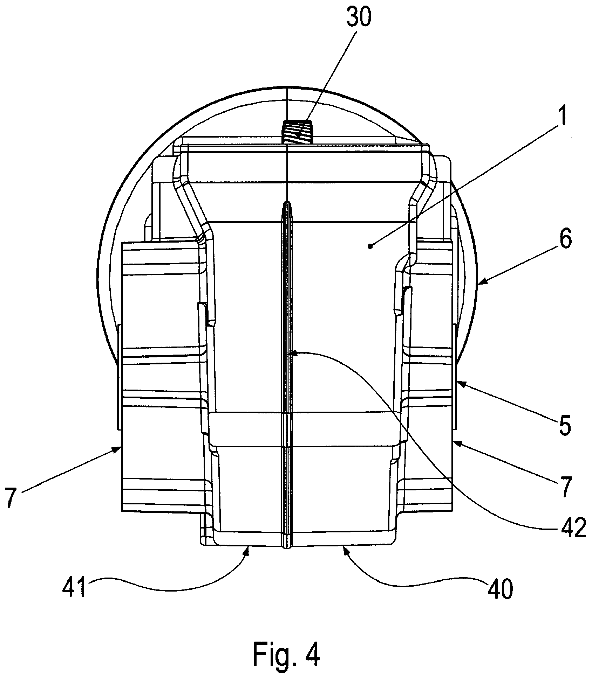

Insbesondere ist in Figur 4 im Bereich 40, also rechts von der Ebene 42, ein größerer Anteil des Volumens des Innenraumbereichs des Getriebes als im Bereich 41, also links von der Ebene 42. In dem rechts von der Ebene 42 angeordneten Anteil des Innenraumbereichs ist auch das Abtriebsrad, also das drehfest mit der abtreibenden Welle 5 verbundene Verzahnungsteil, angeordnet.

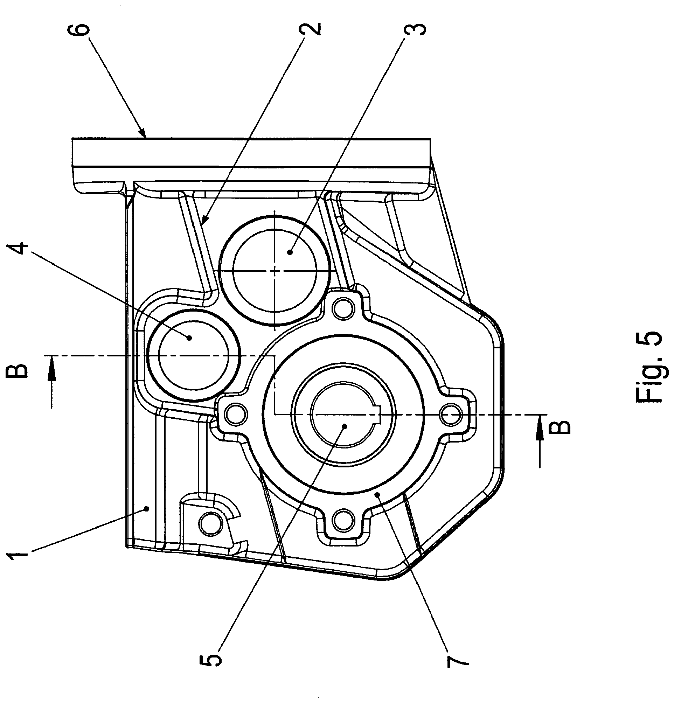

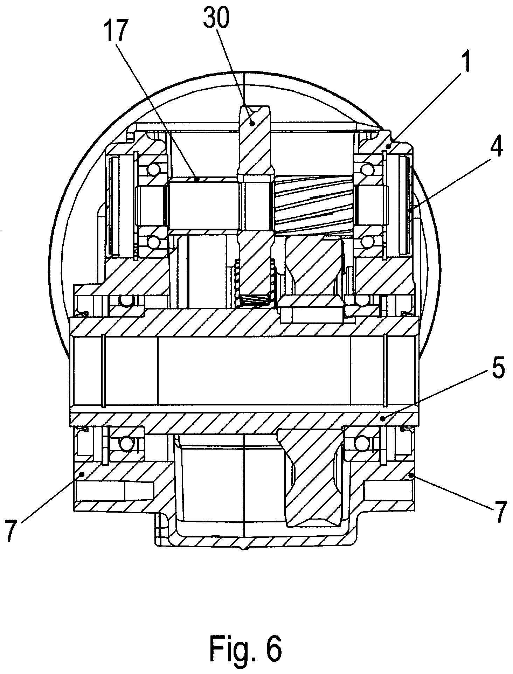

In Figur 5 ist die für den Querschnitt gemäß Figur 6 relevante Schnittlinie dargestellt. Hierbei ist in Figur 6 klar erkennbar, dass das Abtriebsrad, rechts von der Ebene angeordnet ist. Ebenso ist die durch das Deckelteil 4, insbesondere Verschlusskappe, zur Umgebung hin abgedeckte Zwischenwelle mit einer Verzahnung versehen, die mit dem Abtriebsrad im Eingriff ist.

Wie in den Figuren dargestellt, ist die abtreibende Welle 5 axial beidseitig zugänglich angeordnet. Insbesondere ist die abtreibende Welle 5 als Hohlwelle ausgeführt.

Wesentlich ist also, dass das Gehäuseteil 1 derart asymmetrisch ausgeführt ist, dass das Abtriebsrad von der Ebene 42 beabstandet ist. Somit ist auf der dem Abtriebsrad zugewandten Seite der Ebene 42 mehr Schmieröl und ein größerer Anteil des Innenraumbereichs des Getriebes angeordnet als auf der vom Abtriebsrad abgewandten Seite der Ebene 42.

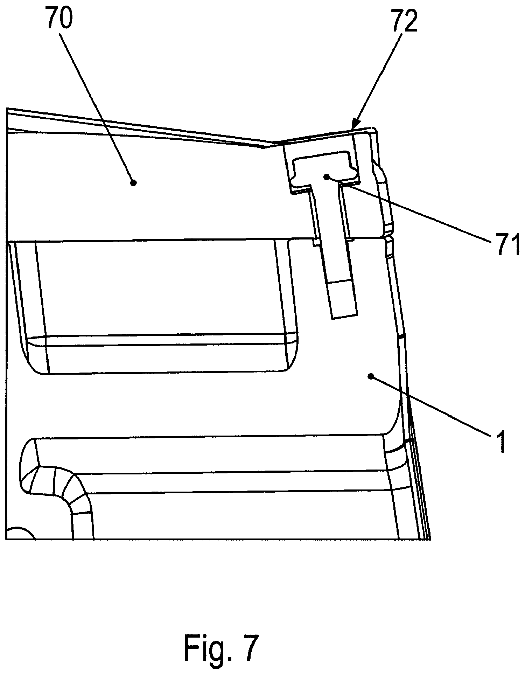

Wie in Figur 7 gezeigt, ist der Getriebedeckel 70 mittels Schrauben 71 ans Gehäuseteil 1 angeschraubt.

Da die Wandstärke des Gehäuseteils, insbesondere in der Nähe des Kontaktbereichs zwischen Gehäuseteil 1 und Getriebedeckel 70, konstant ist, verläuft die Wandung des Gehäuseteils 1 parallel zur Ziehrichtung.

Somit sind die Schrauben 71 ebenfalls parallel zu dieser Ziehrichtung ausgerichtet. Die Normalenrichtung der ebenen Verbindungsfläche zwischen Getriebedeckel 70 und Gehäuseteil 1 ist also nicht parallel zu der Schraubachse der Schrauben 71 ausgerichtet.

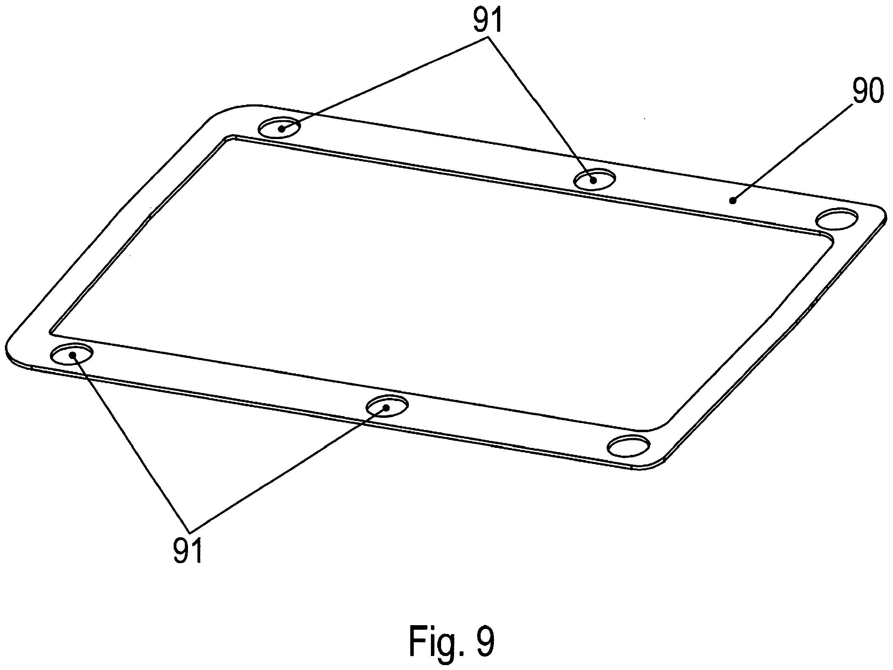

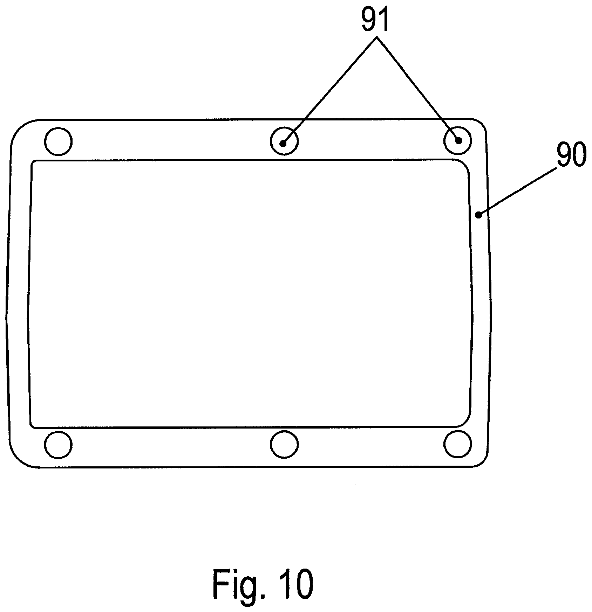

Auf diese Weise ist eine hohe Stabilität und Festigkeit des Getriebes gewährleistet. Außerdem ist im Bereich der Verbindungsfläche eine Flachdichtung 90 zwischengeordnet, die in Figur 9 und Figur 10 näher dargestellt ist.

Wie in Figur 7 gezeigt, weist die Oberseite des Getriebedeckels einen ebenen Bohrflächenbereich 72 auf, in welchen eine durchgehende Stufenbohrung eingebracht ist, so dass die Schraube 71 mit ihrem Schraubenkopf an der Stufe der Stufenbohrung anliegt und ihr Gewindebereich in eine Gewindebohrung des Gehäuseteils 1 eingebracht ist. Die Gewindebohrung und die Sacklochbohrung liegen in Flucht zueinander und sind somit beide parallel zur Ziehrichtung des zweiten Schiebers ausgerichtet.

Zur Herstellung der Gewindebohrung wird das Gehäuseteil 1 mit einem Keil unterlegt und dann die Gewindebohrung in die Verbindungsfläche eingebracht. Der Keilwinkel des Keils gleicht dem Neigungswinkel und/oder der Schräge der Ziehrichtung des zweiten Schiebers.

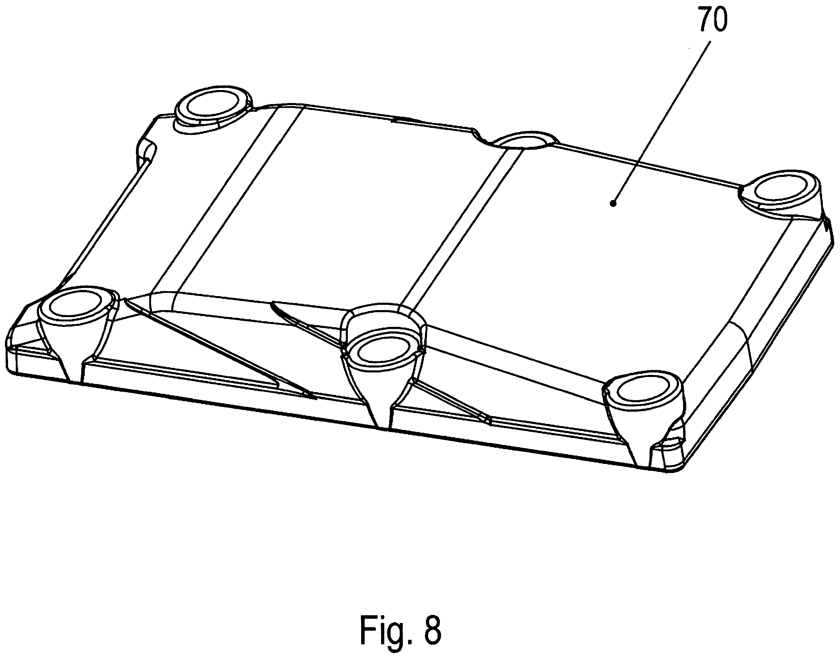

Figur 8 zeigt den Getriebedeckel 70 in Schrägansicht.

Figur 9 und 10 zeigen die Flachdichtung 90 samt durchgehender kreisrunder, insbesondere also zylindrischer, Ausnehmungen 91, durch welche bei auf dem Gehäuseteil 1 aufgesetztem Getriebedeckel 70 die Schrauben 71 durchgeführt sind, obwohl diese schräg ausgerichtet sind, also einen nicht verschwindenden Winkel zur Normalenrichtung der Verbindungsfläche aufweisen.

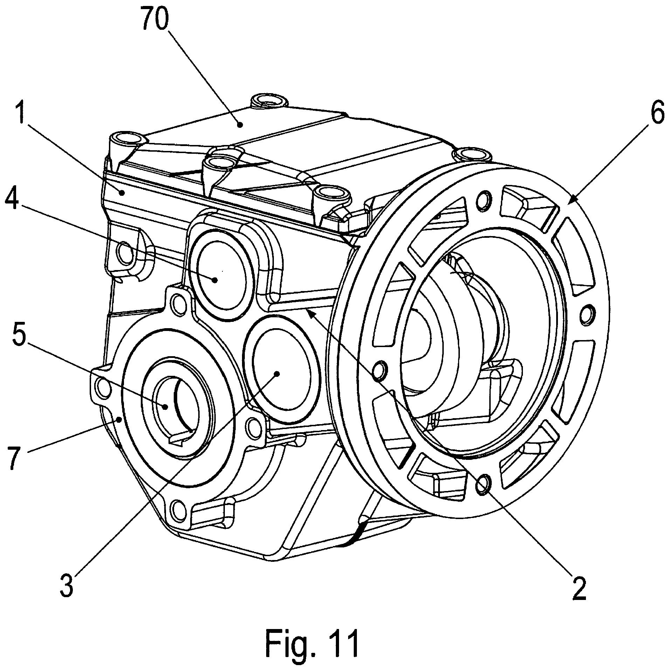

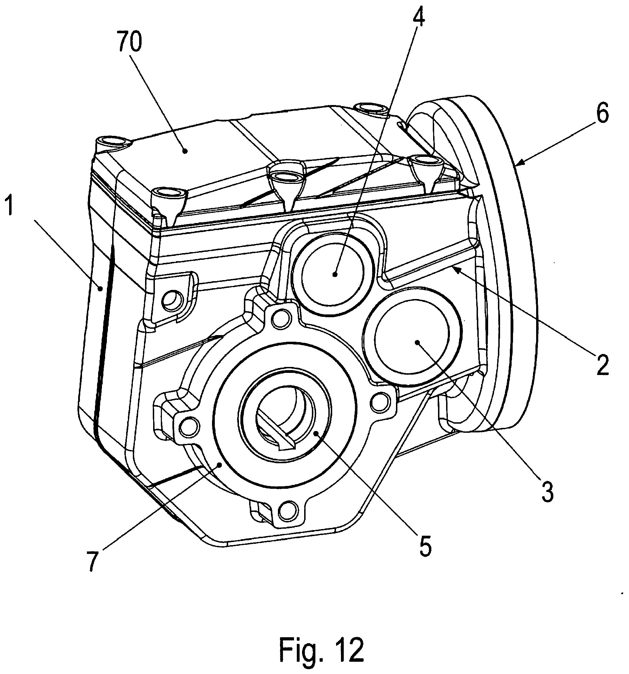

Figur 11 und 12 zeigen das Getriebe aus verschiedenen Blickrichtungen. Hierbei ist wiederum die schräge Ausrichtung der Ziehrichtung des ersten Schiebers ersichtlich sowie auch die schräge Ausrichtung der Ziehrichtung des zweiten Schiebers.

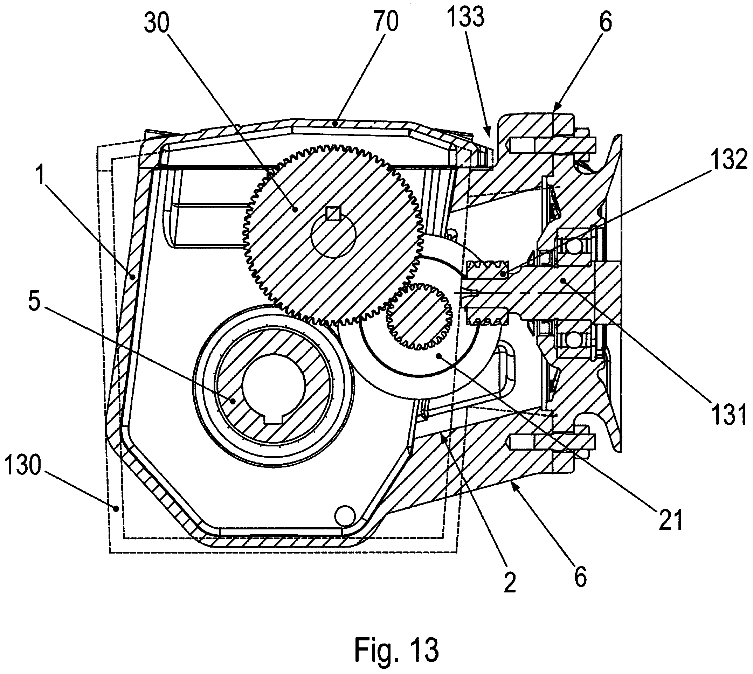

Figur 13 zeigt einen Querschnitt durch das erfindungsgemäße Getriebe mit Gehäuseteil 1, wobei der entsprechende Querschnitt durch ein anderes Gehäuseteil, bei dessen Herstellung die Ziehrichtungen nicht schräg sind, sondern parallel zueinander oder mit einem Winkelbetrag von 90° zueinander ausgerichtet sind.

Die Rotorwelle des Elektromotors fungiert in dem Ausführungsbeispiel nach Figur 13 als eintreibende Welle 131, welche mit dem Ritzel 132 drehfest verbunden ist, welches im Eingriff ist mit dem Tellerrad 21 der ersten Zwischenwelle 20 des Getriebes.

Das Tellerrad ragt in den Kanal 2 hinein. Insbesondere liegt die senkrechte Projektion der Drehachse des Tellerrads deutlich im Kanal 2, insbesondere auf dem unteren Rand des Kanals 2.

Mit gestrichelten Linien ist 130 ein gedachtes Gehäuseteil bei nicht schräger Ziehrichtung gezeigt. Im Vergleich mit dem gedachten Gehäuseteil 130 wird deutlich, dass der Gehäusedeckel 1 verkürzt ausführbar ist. Die Gehäuseöffnung ist möglichst klein. Der Getriebedeckel 70 ist verkürzt ausführbar.

Die Ausführung des Gehäuseteils 1 als Aluminium-Druckgussteil bewirkt ein verringertes Gesamtgewicht gegenüber einer Ausführung aus Stahl.

Zwischen Getriebedeckel 70 und Flanschbereich 6 ist eine Engstelle 133 vorhanden, die bei der gestrichelten Variante ein Überlackieren erschwert oder verhindert. Erfindungsgemäß, also bei der Verwendung der schrägen Ziehrichtungen, wird der Abstand zwischen Flanschbereich 6 und Getriebedeckel 70 vergrößert, so dass die Engstelle kein Risiko darstelle, sondern eine Lackierung in einfacher Weise ermöglicht ist. Außerdem ist ein Festsetzen von Schmutz an der Engstelle 133 erschwert und ein Reinigen vereinfacht, da mehr Platz vorhanden ist.

Die Kanalwandung und die Lageraufnahme, also der eintreibende und der abtreibende Bereich sind infolge der erfindungsgemäßen schrägen Ziehrichtungen verstärkt ausführbar. Dies ist besonders vorteilhaft, da das Getriebe als Aufsteckgetriebe fungiert, also von dem nicht drehbar angeordneten Bereich einer vom Getriebe anzutreibenden Last gehalten wird.

Axial beidseitig ist an der abtreibenden Welle eine anzutreibende Last verbindbar. Hierzu ist einerseits eine Verbindung zwischen einem drehenden Teil, insbesondere Vollwellenabschnitt, der anzutreibenden Last mit der Hohlwelle drehfest zu verbinden. Außerdem ist auch der nicht drehbar angeordnete Bereich der anzutreibenden Last mit dem Gehäuseteil zu verbinden.

Hierzu ist axial beidseitig die selbe mechanische Schnittstelle am Gehäuseteil 1 ausgebildet. Diese Schnittstelle weist einerseits ein Zentriermittel, wie Zentrierrand oder Zentrierbund, auf und andererseits ein Bohrbild für Verbindungsschrauben. Diese Schnittstelle ist entgegen der Gehäusewand symmetrisch zur Ebene 42 in Figur 4 ausgerichtet.

Somit ist also die Last mit dem selben Bohrbild wahlweise von axial vorne oder von axial hinten kommend mit dem Gehäuseteil 1 verbindbar.

In Figur 14 kennzeichnet das Bezugszeichen D die senkrechte Projektion der Drehachse der ersten Zwischenwelle 20 in Ebene E, das Bezugszeichen E die Ebene, insbesondere Ebene, welche parallel zur Ziehrichtung des Kanals 2 ausgerichtet ist, das Bezugszeichen K1 die senkrechte Projektion der äußersten Mündung des Kanals 2 in den Getriebeinnenraumund das Bezugszeichen K2 die senkrechte Projektion der äußersten Mündung des Kanals 2 zur Umgebung hin.

### Bezugszeichenliste

1 Gehäuseteil
2 Kanal
3 Deckelteil, insbesondere Verschlusskappe
4 Deckelteil, insbesondere Verschlusskappe
5 abtreibende Welle
6 eintriebsseitiger Flanschbereich
7 abtriebsseitiger Flanschbereich
20 Zwischenwelle
21 Verzahnungsteil, insbesondere Tellerrad
22 Verzahnung
30 weiteres Verzahnungsteil
40 erster Bereich des Gehäuseteils 1
41 zweiter Bereich des Gehäuseteils 1
42 Ebene
70 Getriebedeckel
71 Schraube, insbesondere Verbindungsschraube
72 ebener Bohrflächenbereich
90 Flachdichtung
91 Ausnehmung
130 gedachtes Gehäuseteil bei nicht schräger Ziehrichtung
131 eintreibende Welle
132 Ritzel
133 Bereich der Engstelle
D senkrechte Projektion der Drehachse der ersten Zwischenwelle 20 in Ebene E
E Ebene, insbesondere Ebene, welche parallel zur Ziehrichtung des Kanals 2 ausgerichtet ist
K1 Senkrechte Projektion der äußersten Mündung des Kanals 2 in den Getriebeinnenraum
K2 Senkrechte Projektion der äußersten Mündung des Kanals 2 zur Umgebung hin

## Patentansprüche

1. Getriebemotor, welcher ein von einem Elektromotor antreibbares Getriebe, insbesondere Winkelgetriebe, aufweist,
wobei das Getriebe eine mittels Lagern im Gehäuseteil (1) drehbar gelagerte erste Zwischenwelle (20) aufweist und eine eintreibende (131) Welle, insbesondere und eine abtreibende Welle (5),
wobei das Getriebe zwei voneinander beabstandete Verbindungsflächen aufweist, an denen jeweils eine vom Getriebe anzutreibende Vorrichtung, insbesondere Maschine, mit dem Getriebe verbindbar ist,
wobei jede der beiden Verbindungsflächen jeweils ein Bohrbild aufweist insbesondere zur Nutzung für Verbindungsschrauben zur Verbindung der jeweiligen Vorrichtung und des Getriebes,
**dadurch gekennzeichnet, dass**
das Gehäuseteil (1) derart asymmetrisch ausgeführt ist, dass **eine** Ebene (42), deren Normalenrichtung parallel zur Drehachse der ersten Zwischenwelle (20) ausgerichtet ist und welche die Drehachse der eintreibenden Welle enthält, keine Symmetrieebene in Bezug auf die gesamte äußere Oberfläche des Gehäuseteils (1) ist und auch keine Symmetrie-Ebene in Bezug auf **eine** Gehäusewand des Gehäuseteils (1) ist,
wobei die Ebene jedoch eine Symmetrieebene hinsichtlich der beiden Verbindungsflächen samt deren Bohrbilder ist,
insbesondere wobei die abtreibende Welle (5) parallel zur ersten Zwischenwelle (20) angeordnet ist,
**wobei das Gehäuseteil (1) mittels Druckgussverfahrens hergestellt ist, wobei oder nach welchem zum Entformen jeweilige Schieber in jeweiligen Ziehrichtungen bewegt, insbesondere herausgezogen, werden,**
**wobei das Gehäuseteil (1) einen in einer erste Ziehrichtung, insbesondere mit einem ersten Schieber, entformten Kanal (2) aufweist, welcher durch die Wandung des Gehäuses durchgehend ausgeführt ist und in den Innenraumbereich des Getriebes mündet,**
**wobei zwischen der Ziehrichtung und der Drehachse der eintreibenden Welle ein nicht verschwindender Winkel vorhanden ist, insbesondere dessen Betrag zwischen 5° und 45°, insbesondere zwischen 5° und 20°, beträgt.**

2. Getriebemotor nach Anspruch 1,
wobei eine anzutreibende **Vorrichtung** ein zu einem ersten Teil **einer** Last drehbar gelagertes zweites Teil aufweist,
wobei das Gehäuseteil (1) an einer ersten Außenseite ein erstes Bohrbild und ein erstes Zentriermittel, insbesondere Zentrierbund, Zentrierrand und/oder Zentriernut, aufweist,
wobei das Gehäuseteil (1) an einer zweiten Außenseite ein zweites Bohrbild und ein zweites Zentriermittel, insbesondere Zentrierbund, Zentrierrand und/oder Zentriernut, aufweist, insbesondere wobei die erste und zweite Außenseite bezogen auf die Drehachse der abtreibenden Welle (5) axial voneinander beabstandet sind,
wobei das erste und zweite Bohrbild zueinander gleichartig, insbesondere identisch, sind und/oder wobei das erste und zweite Zentriermittel zueinander gleichartig, insbesondere identisch, ausgeführt sind,
insbesondere wobei die erste und zweite Außenseite mit dem ersten und zweiten Bohrbild bezogen auf die Ebene symmetrisch sind,
wobei wahlweise
- das zweite Teil mit dem ersten axialen Endbereich der Hohlwelle drehfest verbindbar ist und das erste Teil mit dem Gehäuseteil (1) am ersten Bohrbild und ersten Zentriermittel verbindbar ist,
- oder das zweite Teil mit dem zweiten axialen Endbereich der Hohlwelle drehfest verbindbar ist und das erste Teil mit dem Gehäuseteil (1) am zweiten Bohrbild und zweiten Zentriermittel verbindbar ist.

3. Getriebemotor nach Anspruch 1 oder 2,
**dadurch gekennzeichnet, dass**
das Gehäuseteil (1) derart asymmetrisch ausgeführt ist, dass das mit der abtreibenden Welle (5) des Getriebes drehfest verbundene Verzahnungsteil (21), insbesondere Zahnrad, von der Ebene beabstandet ist,
insbesondere wobei ein größerer Anteil des Volumens des Innenraumbereichs des Getriebes auf der dem Verzahnungsteil (21) zugewandten Seite der Ebene als auf der vom Verzahnungsteil (21) abgewandten Seite der Ebene angeordnet ist.

4. Getriebemotor nach mindestens einem der vorangegangenen Ansprüche,
**dadurch gekennzeichnet, dass**
die abtreibende Welle (5) axial beidseitig zugänglich und/oder aus dem Gehäuseteil (1) hervorragend angeordnet ist, insbesondere wobei die abtreibende Welle (5) als Hohlwelle ausgeführt ist.

5. Getriebemotor nach mindestens einem der vorangegangenen Ansprüche,
**dadurch gekennzeichnet, dass**
das Gehäuseteil (1) als Aluminium-Druckgussteil gefertigt ist.

6. Getriebemotor nach mindestens einem der vorangegangenen Ansprüche,
**dadurch gekennzeichnet, dass**
das Gehäuseteil (1) die selbe mechanische Schnittstelle für eine vom Getriebe, insbesondere von der abtreibenden Welle (5), anzutreibende Last axial beidseitig der abtreibenden Welle (5) aufweist,
insbesondere also eine erste Schnittstelle am Gehäuseteil (1) zur Verbindung mit einer vom vorderen axialen Endbereich der abtreibenden Welle (5) anzutreibenden Last vorhanden ist und eine zweite Schnittstelle am Gehäuseteil (1) zur Verbindung mit einer vom hinteren axialen Endbereich der abtreibenden Welle (5) anzutreibenden Last vorhanden ist, wobei die erste Schnittstelle identisch ist zur zweiten Schnittstelle,
insbesondere wobei die erste und zweite Schnittstelle symmetrisch zur Ebene ist,
wobei die Schnittstelle jeweils ein am Gehäuseteil (1) angeordnetes Bohrbild und ein am Gehäuseteil (1) angeordnetes Zentriermittel aufweist.

7. Getriebemotor nach mindestens einem der vorangegangenen Ansprüche,
**dadurch gekennzeichnet, dass**
das Getriebe ein Winkelgetriebe ist,
wobei eine mit der eintreibenden Welle drehfest verbunden Verzahnung (22), insbesondere eines Ritzels (132), mit der Verzahnung (22) eines Tellerrads im Eingriff ist, wobei das Tellerrad mit einer ersten Zwischenwelle (20) des Getriebes drehfest verbunden ist,
wobei **eine** senkrechte Projektion (D) der Drehachse der ersten Zwischenwelle (20) auf eine die Ziehrichtung enthaltende Ebene (E) in demjenigen Bereich (K1 - K2) enthalten ist, welcher von der senkrechten Projektion des Kanals (2) auf die die Ziehrichtung enthaltende Ebene überdeckt ist.

8. Getriebemotor **nach Anspruch 7,**
**dadurch gekennzeichnet, dass**
**der lichte Durchmesser des Kanals (2) größer ist als der größte Außendurchmesser des Tellerrads.**

9. Getriebemotor nach mindestens einem der vorangegangenen Ansprüche,
**dadurch gekennzeichnet, dass**
das Gehäuseteil (1) einen in einer zweiten Ziehrichtung, insbesondere mit einem zweiten Schieber, entformten Bereich aufweist,
wobei die zweite Ziehrichtung zur Normalenrichtung der von der Drehachse der eintreibenden Welle und der Drehachse der ersten Zwischenwelle (20) aufgespannten Ebene einen nicht verschwindenden Winkel aufweist, insbesondere dessen Betrag zwischen 5° und 45°, insbesondere zwischen 5° und 20°, beträgt.

10. Getriebemotor nach mindestens einem der vorangegangenen Ansprüche,
**dadurch gekennzeichnet, dass**
der Kanal (2) durch einen Flanschbereich (6) des Getriebes durchgeht,
wobei das Getriebe am Flanschbereich (6) mit dem Elektromotor verbunden ist,
insbesondere wobei das Getriebe den Elektromotor hält und von einem nicht drehbar angeordneten Teil einer vom Getriebe anzutreibenden Last, insbesondere Maschine, gehalten ist.

11. Getriebemotor nach mindestens einem der vorangegangenen Ansprüche,
**dadurch gekennzeichnet, dass**
das Gehäuseteil (1) mit einem Getriebedeckel (70) verbunden ist, wobei die Verbindungsfläche eben ausgeführt ist,
wobei der Getriebedeckel (70) mittels Schrauben mit dem Gehäuseteil (1) verbunden ist,
wobei die Verbindungsfläche parallel zur Drehachse der eintreibenden Welle und parallel zur Drehachse der Zwischenwelle (20),
wobei die Schrauben, insbesondere deren Schraubachsrichtung, parallel zur zweiten Ziehrichtung ausgerichtet sind,
insbesondere wobei eine Flachdichtung (90) zwischen Gehäuseteil (1) und Getriebedeckel (70) angeordnet ist.

12. Getriebemotor nach mindestens einem der vorangegangenen Ansprüche,
**dadurch gekennzeichnet, dass**
die jeweilige Schraube durch eine jeweilige Stufenbohrung des Getriebedeckels (70) durchgeführt und in eine jeweilige Gewindebohrung mit ihrem Gewindebereich eingeschraubt ist,
wobei die Stufenbohrung und die Gewindebohrung jeweils parallel zur zweiten Ziehrichtung aufgerichtet ist,
insbesondere wobei der Schraubenkopf der jeweiligen Schraube an der Deckelfläche oder an der Stufe der jeweiligen Stufenbohrung flächig aufliegt.

13. Getriebemotor nach mindestens einem der vorangegangenen Ansprüche,
**dadurch gekennzeichnet, dass**
die Stufenbohrung in einen ebenen Oberflächenbereich des Getriebedeckels (70) eingebracht ist, wobei die Normalenrichtung des ebenen Oberflächenbereichs parallel zur zweiten Ziehrichtung ausgerichtet ist.

## Claims

1. A geared motor which has a gear drivable by an electric motor, in particular an angle gear, wherein the gear has a first intermediate shaft (20), rotatably mounted in the housing part (1) by means of bearings, and an input (131) shaft, in particular and an output shaft (5), wherein the gear has two connecting surfaces, spaced apart from one another, at which in each case a device, in particular machine, to be driven by the gear is connectable to the gear, wherein each of the two connecting surfaces has in each case a bore pattern which is in particular for utilization for connecting screws for connection of the specific device and the gear, **characterised in that**
the housing part (1) is asymmetrical in such a manner that a plane (42), whose normal direction is oriented parallel to the rotational axis of the first intermediate shaft (20) and which contains the rotational axis of the input shaft, is not a plane of symmetry with respect to the entire outer surface of the housing part (1) and also is not a plane of symmetry with respect to a housing wall of the housing part (1),
wherein the plane is however a plane of symmetry regarding the two connecting surfaces together with their bore patterns,
in particular wherein the output shaft (5) is arranged parallel to the first intermediate shaft (20), wherein the housing part (1) is manufactured by means of a die casting process, wherein or after which respective pushers are moved, in particular pulled out, in respective pulling directions for demoulding,
wherein the housing part (1) has a channel (2) demoulded in a first pulling direction, in particular using a first pusher, which channel passes through the wall of the housing and issues into the interior region of the gear,
wherein between the pulling direction and the rotational axis of the input shaft there is provided a non-zero angle, in particular whose amount is between 5° and 45°, in particular between 5° and 20°.

2. A geared motor according to claim 1,
wherein a device to be driven has a second part rotatably mounted with respect to a first part of a load,
wherein at a first outer side, the housing part (1) has a first bore pattern and a first centering means, in particular centering collar, centering edge and/or centering groove,
wherein at a second outer side, the housing part (1) has a second bore pattern and a second centering means, in particular centering collar, centering edge and/or centering groove,
in particular wherein the first and second outer side are axially spaced apart from one another related to the rotational axis of the output shaft (5),
wherein the first and second bore pattern are similar to each other, in particular identical, and/or wherein the first and second centering means are similar to each other, in particular identical,
in particular wherein the first and second outer side with the first and second bore pattern are symmetrical related to the plane,
wherein either
- the second part is connectable to the first axial end region of the hollow shaft in a rotationally-fixed manner and the first part is connectable to the housing part (1) at the first bore pattern and first centering means,
- or the second part is connectable to the second axial end region of the hollow shaft in a rotationally-fixed manner and the first part is connectable to the housing part (1) at the second bore pattern and second centering means.

3. A geared motor according to claim 1 or 2,
**characterised in that**
the housing part (1) is asymmetrical in such a manner that the toothed part (21), in particular toothed wheel, connected in a rotationally-fixed manner to the output shaft (5) of the gear is spaced apart from the plane,
in particular wherein a greater portion of the volume of the interior region of the gear is arranged on the side, facing the toothed part (21), of the plane than on the side, remote from the toothed part (21), of the plane.

4. A geared motor according to at least one of the preceding claims,
**characterised in that**
the output shaft (5) is arranged in a manner accessible axially at both ends and/or projecting from the housing part (1) axially at both ends, in particular wherein the output shaft (5) is in the form of a hollow shaft.

5. A geared motor according to at least one of the preceding claims,
**characterised in that**
the housing part (1) is manufactured as an aluminium die cast part.

6. A geared motor according to at least one of the preceding claims,
**characterised in that**
the housing part (1) has the same mechanical interface for a load to be driven by the gear, in particular by the output shaft (5), axially at both ends of the output shaft (5),
in particular therefore a first interface is present at the housing part (1) for connection to a load to be driven by the front, axial end region of the output shaft (5) and a second interface is present at the housing part (1) for connection to a load to be driven by the rear, axial end region of the output shaft (5), wherein the first interface is identical to the second interface,
in particular wherein the first and second interface is symmetrical to the plane,
wherein the interface has in each case a bore pattern arranged at the housing part (1) and a centring means arranged at the housing part (1).

7. A geared motor according to at least one of the preceding claims,
**characterised in that**
the gear is an angle gear,
wherein a toothing (22), in particular of a pinion (132), connected to the input shaft in a rotationally-fixed manner engages the toothing (22) of a ring gear, wherein the ring gear is connected to a first intermediate shaft (20) of the gar in a rotationally-fixed manner,
wherein a perpendicular projection (D) of the rotational axis of the first intermediate shaft (20) onto a plane (E) containing the pulling direction is contained **in that** region (K1- K2) which is covered by the perpendicular projection of the channel (2) onto the plane containing the pulling direction.

8. A geared motor according to claim 7,
**characterised in that**
the internal diameter of the channel (2) is greater than the greatest outside diameter of the ring gear.

9. A geared motor according to at least one of the preceding claims,
**characterised in that**
the housing part (1) has a region demoulded in a second pulling direction, in particular using a second pusher,
wherein the second pulling direction has a non-zero angle to the normal direction of the plane spanned by the rotational axis of the input shaft and the rotational axis of the first intermediate shaft (20), in particular its amount is between 5° and 45°, in particular between 5° and 20°.

10. A geared motor according to at least one of the preceding claims,
**characterised in that**
the channel (2) passes through a flange region (6) of the gear,
wherein the gear is connected at the flange region (6) to the electric motor,
in particular wherein the gear supports the electric motor and is supported by a non-rotatably arranged part of a load, in particular machine, to be driven by the gear.

11. A geared motor according to at least one of the preceding claims,
**characterised in that**
the housing part (1) is connected to a gear cover (70), wherein the connecting surface is plane, wherein the gear cover (70) is connected to the housing part (1) by means of screws,
wherein the connecting surface [is] parallel to the rotational axis of the input shaft and parallel to the rotational axis of the intermediate shaft (20),
wherein the screws, in particular their screw axial direction, are oriented parallel to the second pulling direction,
in particular wherein a gasket (90) is arranged between housing part (1) and gear cover (70).

12. A geared motor according to at least one of the preceding claims,
**characterised in that**
the respective screw is passed through a respective stepped bore of the gear cover (7) and is screwed into a respective tapped bore with its threaded region,
wherein the stepped bore and the tapped bore is in each case erected parallel to the second pulling direction,
in particular wherein the screw head of the respective screw rests in a flat manner against the cover surface or against the step of the respective stepped bore.

13. A geared motor according to at least one of the preceding claims,
**characterised in that**
the stepped bore is made in a plane surface region of the gear cover (70), wherein the normal direction of the plane surface region is oriented parallel to the second pulling direction.

## Revendications

1. Motoréducteur muni d'un engrenage, notamment d'un engrenage conique pouvant être entraîné par un moteur électrique,
lequel engrenage comprend un premier arbre intermédiaire (20) monté à rotation dans la partie (1) formant carter, au moyen de paliers, et un arbre d'entrée (131) en particulier et un arbre de sortie (5),
ledit engrenage comportant deux surfaces de jonction distantes l'une de l'autre, au niveau desquelles un dispositif, en particulier une machine devant être entraîné(e) par ledit engrenage, peut être respectivement relié(e) audit engrenage,
chacune des deux surfaces de jonction étant dotée, à chaque fois, d'un gabarit de perçage notamment dédié à l'utilisation par des vis de liaison dévolues à la solidarisation du dispositif considéré et de l'engrenage,
**caractérisé par le fait que**
la partie (1) formant carter est réalisée avec une asymétrie telle qu'un plan (42) dont la direction normale est orientée parallèlement à l'axe de rotation du premier arbre intermédiaire (20), et qui contient l'axe de rotation de l'arbre d'entrée, ne soit pas un plan de symétrie par rapport à l'intégralité de la surface extérieure de ladite partie (1) formant carter, et également pas un plan de symétrie par rapport à une paroi de ladite partie (1) formant carter,
ledit plan étant néanmoins un plan de symétrie concernant les deux surfaces de jonction, y compris les gabarits de perçage de ces dernières,
sachant notamment que l'arbre de sortie (5) est agencé parallèlement au premier arbre intermédiaire (20),
ladite partie (1) formant carter étant fabriquée au moyen d'un procédé de coulée sous pression au cours ou à l'issue duquel, en vue du démoulage, des coulisseaux respectifs sont mus, notamment extraits dans des directions de traction respectives,
laquelle partie (1) formant carter est nantie d'un canal (2) qui est notamment démoulé avec un premier coulisseau, dans une première direction de traction, est de réalisation continue à travers la paroi du carter, et débouche dans la zone d'espace interne de l'engrenage,
un angle non évanescent dont la valeur est notamment comprise entre 5° et 45°, en particulier entre 5° et 20°, étant présent entre ladite direction de traction et ledit axe de rotation de l'arbre d'entrée.

2. Motoréducteur selon la revendication 1,
dans lequel un dispositif, devant être entraîné, présente une seconde partie montée à rotation par rapport à une première partie d'une charge,
la partie (1) formant carter comprenant, sur une première face extérieure, un premier gabarit de perçage et un premier moyen de centrage, en particulier une collerette de centrage, un rebord de centrage et/ou une rainure de centrage,
ladite partie (1) formant carter comprenant, sur une seconde face extérieure, un second gabarit de perçage et un second moyen de centrage, en particulier une collerette de centrage, un rebord de centrage et/ou une rainure de centrage,
les première et seconde faces extérieures étant notamment distantes l'une de l'autre, dans le sens axial, vis-à-vis de l'axe de rotation de l'arbre de sortie (5),
les premier et second gabarits de perçage présentant des réalisations de même type, notamment identiques,
et/ou les premier et second moyens de centrage présentant des réalisations de même type, notamment identiques,
lesdites première et seconde faces extérieures, munies des premier et second gabarits de perçage, étant symétriques par rapport au plan,
sachant que, sélectivement,
- la seconde partie peut être reliée, avec verrouillage rotatif, à la première région extrême axiale de l'arbre creux et la première partie peut être reliée à la partie (1) formant carter, au niveau du premier gabarit de perçage et du premier moyen de centrage,
- ou bien ladite seconde partie peut être reliée, avec verrouillage rotatif, à la seconde région extrême axiale dudit arbre creux et ladite première partie peut être reliée à ladite partie (1) formant carter, au niveau du second gabarit de perçage et du second moyen de centrage.

3. Motoréducteur selon la revendication 1 ou 2,
**caractérisé par le fait que**
la partie (1) formant carter est de réalisation asymétrique, de telle sorte que la partie dentée (21), en particulier la roue dentée reliée avec verrouillage rotatif à l'arbre de sortie (5) de l'engrenage, se trouve à distance du plan,
sachant notamment que, du côté dudit plan pointant vers ladite partie dentée (21), le volume de la zone d'espace interne dudit engrenage présente une plus grande proportion que du côté dudit plan pointant à l'opposé de ladite partie dentée (21).

4. Motoréducteur selon au moins l'une des revendications précédentes, **caractérisé par le fait que**
l'arbre de sortie (5) est accessible de part et d'autre, dans le sens axial, et/ou est agencé avec saillie au-delà de la partie (1) formant carter, ledit arbre de sortie (5) étant notamment réalisé sous la forme d'un arbre creux.

5. Motoréducteur selon au moins l'une des revendications précédentes, **caractérisé par le fait que**
la partie (1) formant carter est produite en tant que pièce moulée sous pression en aluminium.

6. Motoréducteur selon au moins l'une des revendications précédentes, **caractérisé par le fait que**
la partie (1) formant carter présente, de part et d'autre de l'arbre de sortie (5) dans le sens axial, le même interface mécanique dédié à une charge devant être entraînée par l'engrenage, notamment par ledit arbre de sortie (5),
c'est-à-dire, en particulier, qu'un premier interface est présent, sur la partie (1) formant carter, en vue de la liaison avec une charge devant être entraînée par la région extrême axiale antérieure de l'arbre de sortie (5), et qu'un second interface est présent, sur ladite partie (1) formant carter, en vue de la liaison avec une charge devant être entraînée par la région extrême axiale postérieure dudit arbre de sortie (5), ledit premier interface étant identique audit second interface,
lesdits premier et second interfaces étant notamment symétriques par rapport au plan, l'interface comportant, à chaque fois, un gabarit de perçage implanté sur la partie (1) formant carter et un moyen de centrage implanté sur ladite partie (1) formant carter.

7. Motoréducteur selon au moins l'une des revendications précédentes, **caractérisé par le fait que**
l'engrenage est un engrenage conique,
une denture (22) appartenant notamment à un pignon (132), reliée à l'arbre d'entrée avec verrouillage rotatif, étant en prise avec la denture (22) d'une couronne dentée, laquelle couronne dentée est reliée, avec verrouillage rotatif, à un premier arbre intermédiaire (20) dudit engrenage,
sachant qu'une projection verticale (D) de l'axe de rotation dudit premier arbre intermédiaire (20), sur un plan (E) contenant la direction de traction, est incluse dans la zone (K1 - K2) couverte par la projection verticale du canal (2) sur ledit plan contenant ladite direction de traction.

8. Motoréducteur selon la revendication 7,
**caractérisé par le fait que**
le diamètre intérieur du canal (2) est plus grand que le diamètre extérieur maximal de la couronne dentée.

9. Motoréducteur selon au moins l'une des revendications précédentes, **caractérisé par le fait que**
la partie (1) formant carter est dotée d'une région démoulée dans une seconde direction de traction, notamment avec un second coulisseau,
ladite seconde direction de traction présentant, par rapport à la direction normale au plan sous-tendu par l'axe de rotation de l'arbre d'entrée et par l'axe de rotation du premier arbre intermédiaire (20), un angle non évanescent dont la valeur est notamment comprise entre 5° et 45°, en particulier entre 5° et 20°.

10. Motoréducteur selon au moins l'une des revendications précédentes, **caractérisé par le fait que**
le canal (2) parcourt intégralement une zone de bridage (6) de l'engrenage,
lequel engrenage est relié au moteur électrique au niveau de ladite zone de bridage (6), sachant notamment que l'engrenage assure la retenue du moteur électrique et est maintenu par une partie, agencée de manière non rotative, d'une charge devant être entraînée par ledit engrenage et se présentant, en particulier, comme une machine.

11. Motoréducteur selon au moins l'une des revendications précédentes, **caractérisé par le fait que**
la partie (1) formant carter est reliée à un couvercle (70) de l'engrenage, la surface de liaison étant de réalisation plane,
ledit couvercle (70) de l'engrenage étant relié, au moyen de vis, à ladite partie (1) formant carter,
ladite surface de liaison étant parallèle à l'axe de rotation de l'arbre d'entrée et parallèle à l'axe de rotation de l'arbre intermédiaire (20),
sachant que lesdites vis, notamment la direction de leur axe de vissage, sont orientées parallèlement à la seconde direction de traction,
sachant, en particulier, qu'une garniture d'étanchement (90) aplatie est interposée entre ladite partie (1) formant carter et ledit couvercle (70) de l'engrenage.

12. Motoréducteur selon au moins l'une des revendications précédentes, **caractérisé par le fait que**
la vis considérée est introduite à travers un alésage étagé respectif du couvercle (70) de l'engrenage et est vissée, par sa région filetée, dans un perçage taraudé respectif,
ledit alésage étagé et ledit perçage taraudé étant orientés, à chaque fois, parallèlement à la seconde direction de traction,
sachant notamment que la tête de ladite vis considérée repose à plat sur la surface du couvercle, ou sur le gradin dudit alésage étagé respectif.

13. Motoréducteur selon au moins l'une des revendications précédentes, **caractérisé par le fait que**
l'alésage étagé est pratiqué dans une région plane de la surface du couvercle (70) de l'engrenage, la direction normale de ladite région plane de la surface étant orientée parallèlement à la seconde direction de traction.
